Europäisches Patentamt

European Patent Office

Office européen des brevets

(19)

(11) Veröffentlichungsnummer: **0 191 312**
**B1**

# (12) EUROPÄISCHE PATENTSCHRIFT

(45) Veröffentlichungstag der Patentschrift:
26.10.88

(51) Int. Cl.⁴: **F 16 B 13/04**

(21) Anmeldenummer: **86100535.3**

(22) Anmeldetag: **17.01.86**

(54) In einem Bohrloch in festem Untergrund verkeilbares Befestigungselement.

(30) Priorität: **14.02.85 DE 3505050**

(43) Veröffentlichungstag der Anmeldung:
**20.08.86 Patentblatt 86/34**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**CH - A - 600 178**
**DE - A - 2 347 205**
**DE - A - 2 403 699**
**DE - A - 2 507 658**
**GB - A - 2 010 431**

(73) Patentinhaber: **"TOGE-DÜBEL" A. Gerhard GmbH,
Illesheimer Strasse 10, D-8500 Nürnberg 80 (DE)**

(72) Erfinder: **Gerhard, Anton, Illesheimer Strasse 10,
D-8500 Nürnberg 80 (DE)**

(74) Vertreter: **Rau, Manfred, Dr. Dipl.-Ing. et al, Rau &
Schneck, Patentanwälte Königstrasse 2,
D-8500 Nürnberg 1 (DE)**

## Beschreibung

Die Erfindung betrifft ein Befestigungselement nach dem Oberbegriff des Anspruches 1.

Bei einem derartigen, aus der DE-A-2507658 bekannten Befestigungselement werden der Ankerbolzen und der Keil durch einen Ring aus Kunststoff zusammengehalten, der als einzige Aufgabe hat, den Keil gegen Verlust zu sichern bzw. in der richtigen Lage relativ zum Ankerbolzen für den Beginn einer Montage in einem Bohrloch zu halten. Die als Kraftspeicher dienende Druckfeder liegt einerseits gegen zwei an einem langen äusseren Bereich des Ankerbolzens ausgebildete Nasen und andererseits gegen einen im Ankerbolzen eingerasteten Schieber an. Nach dem Einschieben des Ankerbolzens mit Keil in ein Bohrloch wird dieser als Feststeller dienende Schieber quer zum Ankerbolzen aus seiner Verriegelungsstellung herausgeschoben, wodurch die Feder sich entspannen kann und unter Mitnahme des Feststellers den Keil in das Bohrloch treibt. Dieses Befestigungselement lässt sich in Beton und harten Ziegeln einsetzen und sitzt sehr zuverlässig und fest mit hohen Auszugswerten in entsprechenden Bohrlöchern. Nachteilig ist der relativ komplizierte Aufbau und die mehrere Handgriffe erfordernde Montage in einem Bohrloch. Weiterhin wird als nachteilig empfunden, dass das Befestigungselement verhältnismässig weit aus dem Bohrloch herausragt.

Der Erfindung liegt die Aufgabe zugrunde, ein Befestigungselement der gattungsgemässen Art zu schaffen, das bei einfachem Aufbau sich einfach montieren lässt und nur um ein Mindestmass aus dem Bohrloch herausragt.

Diese Aufgabe wird erfindungsgemäss durch die Merkmale des Kennzeichnungsteiles des Anspruches 1 gelöst. Der unelastische Ring dient als Feststeller, der in seiner Ausgangsstellung im Bereich der Keilfläche des Ankerbolzens den Ankerbolzen und den Keil unter der Druckkraft des Kraftspeichers gegeneinander verklemmt. Der Ring sichert also den Keil nicht nur radial gegen ein Abfallen vom Ankerbolzen, sondern hält ihn auch in einer definierten axialen Lage gegenüber dem Ankerbolzen, in der der Gesamtdurchmesser von Keil und Ankerbolzen etwas kleiner ist als der Durchmesser des Bohrloches. Beim Einschieben des Ankerbolzens mit Keil in das Bohrloch setzt sich der Ring gegen die Bohrlochkante und wird relativ zum Ankerbolzen in eine Stellung hinter der Keilfläche des Ankerbolzens zurückgeschoben. In dieser Stellung hält der Ring den Keil in einer relativ zum Ankerbolzen verschiebbaren Lage. Der Keil wird also beim Einschieben des Ankerbolzens mit Keil in ein Bohrloch fortlaufend freigegeben, wird aber von dem Kraftspeicher nur so weit in Einschubrichtung relativ zum Ankerbolzen verschoben, als der Bohrlochdurchmesser dies zulässt. Wenn der Keil mit seinem vorderen Ende gegen die Bohrlochwand zur Anlage kommt, dann wird er dort festgehalten und, da lediglich auf den Ankerbolzen Einschubkräfte ausgeübt werden, relativ zum Ankerbolzen wieder geringfügig zurückgeschoben. Es stellt sich so ständig ein Gleichgewicht zwischen der Druckkraft des Kraftspeichers und der von der Bohrlochwand ausgeübten Gegenkraft ein. Auf diese Weise lässt sich mit einer einzigen Handbewegung der Ankerbolzen mit Keil über die volle Länge in das Bohrloch einschieben. Dann kann sich unter dem Druck des Kraftspeichers der Keil so weit spreizen, dass Keil und Ankerbolzen fest gegenüber der Bohrlochwand anliegen. Eine leichte Zugbewegung auf den Ankerbolzen führt dann zu einem Setzen des Befestigungselementes, d. h. es wird fest im Bohrloch verkeilt. Untersuchungen haben gezeigt, dass die sogenannten Auszugswerte, d. h. die zum Ausziehen des Befestigungselementes aus einem Bohrloch notwendige Kraft, so gross ist, dass beim Einsatz in Beton der Ankerbolzen reisst. Wenn im Untergrund sich ein Riss bildet, so dass das Bohrloch seinen Durchmesser geringfügig vergrössert, dann wird der Keil vom Kraftspeicher nachgeschoben und setzt sich wieder fest.

Die Ansprüche 2 und 3 geben optimale Ausgestaltungen des Feststellers an. Die Ansprüche 4 und 5 geben Neigungswinkel an, mit denen besonders gute Verspreizungen erreicht werden. Die Ansprüche 6 bis 9 geben Massnahmen an, wie das Widerlager für den Kraftspeicher besonders günstig und für verschiedene Funktionen ausgestaltet werden kann.

Weitere Einzelheiten und Vorteile der Erfindung ergeben sich aus der nachfolgenden Beschreibung eines Ausführungsbeispiels anhand der Zeichnung. Es zeigt

Fig. 1 einen Ankerbolzen in einer Seitenansicht entsprechend dem Sichtpfeil I in Fig. 2,

Fig. 2 eine Draufsicht auf den Ankerbolzen entsprechend dem Sichtpfeil II in Fig. 1,

Fig. 3 einen Querschnitt durch den Ankerbolzen entsprechend der Schnittlinie III–III in Fig. 1,

Fig. 4 einen Keil in Seitenansicht entsprechend dem Sichtpfeil IV in Fig. 5,

Fig. 5 den Keil in Draufsicht entsprechend dem Sichtpfeil V in Fig. 4,

Fig. 6 eine Stirnansicht des Keils entsprechend dem Sichtpfeil VI in Fig. 4,

Fig. 7 eine Stirnansicht eines als Ring ausgebildeten Feststellers,

Fig. 8 ein montiertes Befestigungselement vor dem Einschieben in ein Bohrloch,

Fig. 9 das Befestigungselement in teilweise in ein Bohrloch eingeschobenem Zustand,

Fig. 10 das Befestigungselement in völlig in das Bohrloch eingeschobenem Zustand,

Fig. 11 das Befestigungselement nach dem endgültigen Verkeilen im Bohrloch und

Fig. 12 eine geänderte Ausführungsform des Befestigungselementes in einer Darstellung entsprechend Fig. 8.

Das in der Zeichnung dargestellte Befestigungselement weist einen Ankerbolzen 1 auf, der an seinem einen Ende mit einem zylindrischen Gewindeabschnitt 2 mit einem Aussengewinde 3 versehen ist.

Im Anschluss an den Gewindeabschnitt 2 weist der Ankerbolzen einen Kreissegment-Abschnitt 4 auf. Es handelt sich hierbei also um einen Abschnitt mit kreissegmentförmigem Querschnitt, wobei die die entsprechende Ausnehmung begrenzende ebene Fläche 5 parallel zur Mittel-Längs-Achse 6 des Ankerbolzens 1 verläuft. Der Kreissegment-Abschnitt 4 füllt etwas mehr als ein halbzylindrisches Profil.

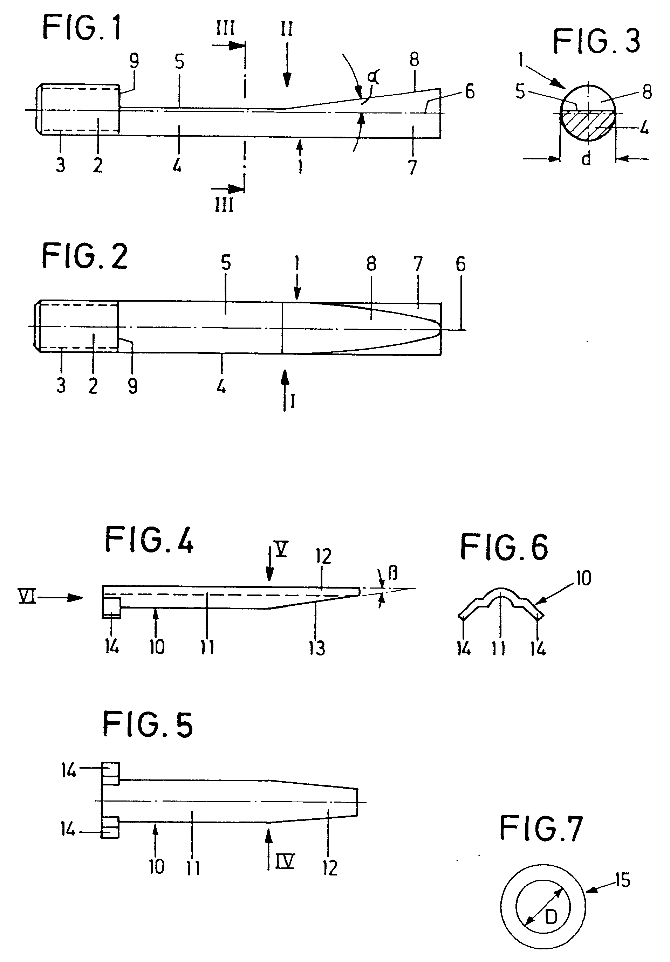

An den Kreissegment-Abschnitt 4 schliesst sich ein Keil-Abschnitt 7 an, der eine zur Mittel-Längs-Achse 6 bzw. der ebenen Fläche 5 geneigte ebene Keilfläche 8 aufweist. Diese läuft am Ende des Ankerbolzens 1 etwa im Kreis-Umfang des Ankerbolzens 1 aus, wie aus den Fig. 2 und 3 hervorgeht. Der Neigungswinkel α zwischen der Keilfläche 8 und der Mittel-Längs-Achse 6 ist etwa 5 bis 8° und bevorzugt 7°. Am Übergang vom Gewindeabschnitt 2 zum Kreissegment-Abschnitt 4 ist eine radial zur Achse 6 verlaufende Anschlagfläche 9 ausgebildet.

Es ist weiterhin ein Keil 10 vorgesehen, der etwas kürzer ist als die Gesamtlänge des Kreissegment-Abschnitts 4 und des Keil-Abschnitts 7 des Ankerbolzens 1. Der Keil 10 weist einen kreissegmentförmigen Abschnitt 11 auf, der etwas kürzer ist als der Kreissegment-Abschnitt 4. Er weist weiterhin einen keilförmigen Abschnitt 12 auf, der etwas kürzer ist als der Keil-Abschnitt 7 des Ankerbolzens 1. Der kreissegmentförmige Abschnitt 11 und der Kreissegment-Abschnitt 4 ergänzen sich zu einem Kreis, d.h. der Aussenquerschnitt des kreissegmentförmigen Abschnitts 11 ist etwas kleiner als halbkreisförmig.

Der Keil 10 weist in seinem keilförmigen Abschnitt 12 eine Führungsfläche 13 auf, die gegenüber den Mantellinien des Keils 10 um einen Winkel β geneigt ist, der geringfügig kleiner ist als der Neigungswinkel α. Er ist beispielsweise um etwa 1° kleiner.

Der Keil 10 kann einen innen hohlen Querschnitt aufweisen, so dass er beispielsweise aus Blech geformt werden kann. Er weist am freien Ende des kreissegmentförmigen Abschnitts 11 zwei seitlich vorstehende Vorsprünge 14 auf.

Weiterhin ist als Feststeller ein aus Metall bestehender unelastischer Ring 15 vorgesehen, dessen Innendurchmesser D etwa 0,1 mm grösser ist als der Durchmesser d des Ankerbolzens 1.

Wenn der Keil 10 so auf dem Ankerbolzen 1 liegt, dass der kreissegmentförmige Abschnitt 11 gegen die Anschlagfläche 9 anliegt, dann kann der Ring 15 vom Keil-Abschnitt 7 her auf den Ankerbolzen 1 geschoben werden. Er wird nur so weit über den Ankerbolzen 1 geschoben, dass er gerade den keilförmigen Abschnitt 12 des Keils 10 überdeckt. Wenn dieser dann geringfügig in Richtung zum Keil-Abschnitt 7 hin verschoben wird, dann wird er aufgrund der radialen Verschiebung der Führungsfläche 13 auf der Keilfläche 8 radial vom Ankerbolzen 1 abgehoben und verklemmt sich mit dem Ring 15. Ein weiteres Verschieben des Keils 10 ist also dann nicht möglich.

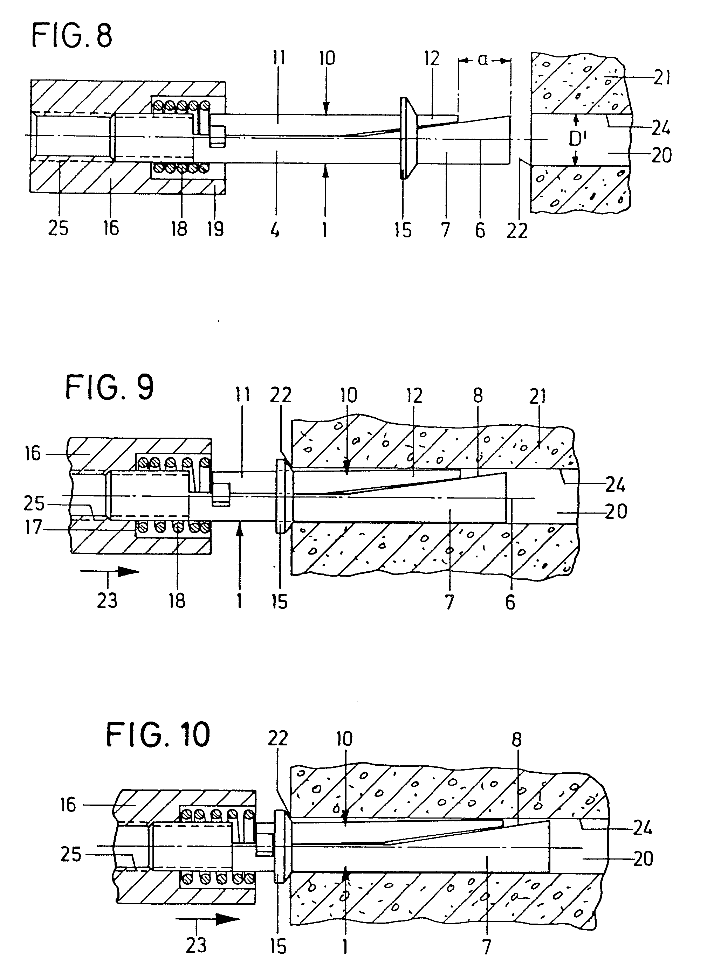

Das vordere Ende des Keils 10 hat in montiertem Zustand bei Klemmung durch den Ring 15 einen Abstand a zum vorderen Ende des Ankerbolzens 1. Da das vordere Ende des Keils 10 in dieser Stellung nicht über den durch den Ankerbolzen 1 vorgegebenen Kreisumfang vorstehen soll, hat der Keil 10 ein stumpfes vorderes Ende, dessen radiale Erstreckung etwa 1 mm beträgt. In dieser Stellung des Keils 10 liegt seine Führungsfläche 13 nicht flächig auf der Keilfläche 8 des Ankerbolzens 1 auf, sondern hat – wie aus Fig. 8 hervorgeht – aufgrund der Differenz zwischen den Winkeln α und β einen geringfügigen Spalt zum Ankerbolzen 1. Lediglich das vordere Ende des Keils 10 liegt linienförmig an der Keilfläche 8 des Ankerbolzens 1 an.

Auf das Aussengewinde 3 des Gewindeabschnittes 2 ist eine mutterartige Gewindehülse 16 aufgeschraubt, gegen deren dem Kreissegment-Abschnitt 4 zugewandte Stirnseite 17 eine als Kraftspeicher dienende, vorgespannte Schrauben-Druckfeder 18 anliegt, die mit ihrem anderen Ende gegen die Vorsprünge 14 des Keils 10 anliegt. Durch diese Druckfeder 18 wird der Keil in der geschilderten Lage gehalten, in der er einen geringen Abstand von der Anschlagfläche 9 des Ankerbolzens 1 aufweist, so dass in dieser Stellung der Ankerbolzen 1, der Keil 10 und der als Feststeller dienende Ring 15 in ihrer Lage zueinander fixiert sind, wie sie in Fig. 8 dargestellt ist. Die Vorspannung der Druckfeder 18 wird durch entsprechendes Anziehen der Gewindehülse 16 erreicht, d.h. letztere bildet ein nachspannbares Widerlager. Die Gewindehülse 16 weist einen die Druckfeder 18 überdeckenden Aussenmantel 19 auf, d.h. die Stirnseite 17 ist versenkt ausgebildet.

Die Montage des vorstehend geschilderten Befestigungselements geht wie folgt vor sich:

Das Befestigungselement wird in der vormontierten Ausführung gemäss Fig. 8 in ein Bohrloch 20 in festem Untergrund 21, wobei es sich in der Regel um Beton, gegebenenfalls noch um harte Ziegelsteine handelt, eingeschoben. Der Durchmesser D' des Bohrlochs 20 ist üblicherweise um 0,2 bis 0,4 mm grösser als der Durchmesser d des Ankerbolzens 1. Ankerbolzen 1 und Keil 10 werden frei in das Bohrloch 20 eingeführt, bis der Ring 15 gegen die Bohrlochkante 22 zur Anlage kommt. Beim weiteren Einschieben des Befestigungselements wird der Ring 15 relativ zum Ankerbolzen 1 und entsprechend zum Keil 10 in Richtung auf den Gewindeabschnitt 2 verschoben. Hierbei wird aus den oben geschilderten Gründen das Spiel zwischen dem Ring 15 und dem Keil 10 etwas grösser, so dass er – wenn auch nur geringfügig – mit seiner Führungsfläche 13 auf der Keilfläche 8 des Ankerbolzens 1 von der Druckfeder 18 zusätzlich in Einschubrichtung 23 verschoben werden kann. Dieses Verschieben kann aber nur so weit vor sich gehen, bis das vordere Ende des Keils 10 mit der Bohrlochwand 24 in intensive Berührung kommt. Da beim Einschieben des Befestigungselementes über die Gewindehülse 16 lediglich Kräfte auf den Ankerbolzen 1 ausgeübt werden, werden entsprechend von der Bohrlochwand 24 entgegengesetzt gerichtete Kräfte auf den Keil 10 ausgeübt. Wie aus den Fig. 9 und 10 hervorgeht, können der Ankerbolzen 1 zusammen mit dem Keil 10 unter Verschiebung des Rings 15 bis an die Vorsprünge 14 des Keils 10 in das Bohrloch 20 geschoben werden, ohne dass der Keil 10 nennenswert in Einschubrichtung 23 gegenüber dem Ankerbolzen 1 verschoben wird, obwohl er durch den als Feststeller dienenden Ring 15 nicht mehr gegenüber dem Ankerbolzen 1 verklemmt ist.

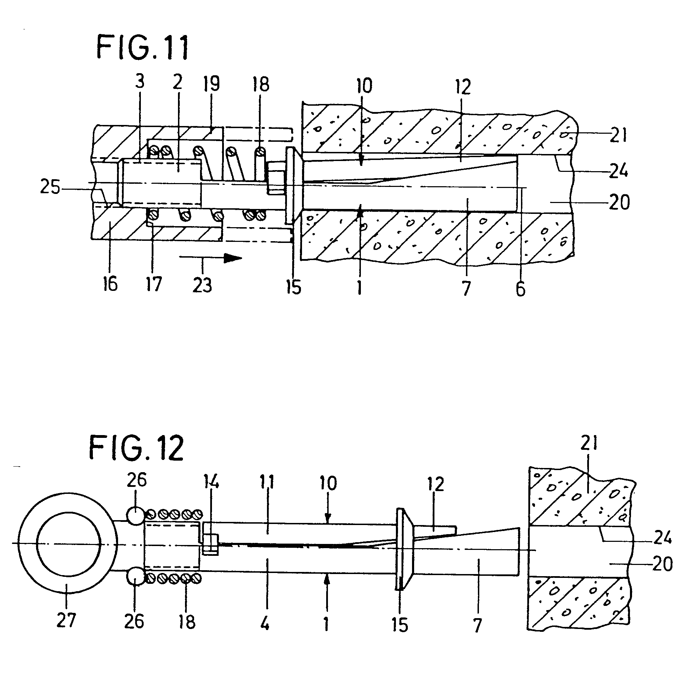

Wenn der Ankerbolzen 1 zusammen mit dem Keil 10 – entsprechend der Darstellung in Fig. 10 vollständig oder soweit es die Tiefe des Bohrlochs 20 zulässt – in letzteres hineingeschoben ist, dann kann sich der Keil 10 unter dem Druck der Druckfeder 18 in Einschubrichtung 23 verschieben, wodurch gleichzeitig eine Spreizung von Ankerbolzen 1 und Keil 10 relativ zueinander erfolgt. Wenn jetzt der Ankerbolzen 1 auf Zug, also entgegen der Einschubrichtung 23 belastet wird, dann wird lediglich der Ankerbolzen 1 wieder geringfügig aus dem Bohrloch 20 herausgezogen, während der Keil 10 aufgrund der Kraftbelastung durch die Druckfeder 18 und aufgrund seiner Reibung an der Bohrlochwand 24 sich gegenüber dem Bohrloch 20 nicht bewegt, d. h. er verschiebt sich relativ zum Ankerbolzen 1 in Einschubrichtung 23 etwa in die in Fig. 11 dargestellte Stellung. In dieser Lage ist das Befestigungselement fest im Untergrund 21 verankert. Das Mass dieser Relativverschiebung zueinander hängt bei vorgegebenen Massen von Ankerbolzen 1 und Keil 10 wesentlich vom Bohrlochdurchmesser D' ab.

Wenn der Keil 10 insbesondere entsprechend Fig. 11 relativ zum Ankerbolzen 1 in Einschubrichtung 23 verschoben wird, dann kommt seine Führungsfläche 13 zur flächigen Anlage an der Keilfläche 8 des Ankerbolzens 1, während der kreissegmentförmige Abschnitt 11 des Keils 10 nicht mehr flächig, sondern nur noch linienförmig an der ebenen Fläche 5 des Ankerbolzens 1 anliegt. Im Bereich des Keil-Abschnitts 7 des Ankerbolzens 1 und des keilförmigen Abschnittes 12 des Keils 10 ist also eine flächige Anlage zwischen Ankerbolzen 1 und Keil 10 gegeben, so dass die beim Verkeilen gegenüber der Bohrlochwand 24 auftretenden radialen Druckkräfte besonders gut aufgenommen werden können.

Bei Bedarf kann die Gewindehülse 16 jetzt weiter auf den Gewindeabschnitt 2 aufgeschraubt werden, wodurch zum einen die Druckfeder 18 wieder stärker vorgespannt wird und wodurch zum anderen, was wesentlicher ist, die Gewindehülse 16 bis in die Nähe des Untergrundes 21 kommt, wobei gleichzeitig die Druckfeder 18 und der aus der Wand teilweise herausragende Kreissegment-Abschnitt 4 verdeckt werden.

Die Gewindehülse 16 dient gleichzeitig als Befestigungselement, d. h. in ihre nach aussen offene Gewindebohrung 25 können zu befestigende Teile eingeschraubt werden.

Eine Demontage des Befestigungselementes aus einem Bohrloch 20 kann in verhältnismässig einfacher Weise dadurch erfolgen, dass die Gewindehülse 16 vom Gewindeabschnitt 2 abgeschraubt wird, wodurch gleichzeitig die Druckfeder 18 entlastet wird und abgezogen werden kann. Dann kann mit einem geeigneten Werkzeug der Keil 10 herausgezogen werden, wodurch gleichzeitig die Verklemmung des Ankerbolzens 1 in dem Bohrloch 20 aufgehoben wird.

Die Ausführungsform nach Fig. 12 entspricht weitgehend identisch der Ausführungsform nach den Fig. 8 bis 11. Lediglich das Widerlager wird durch zwei am Ankerbolzen 1 ausgeformte nasenförmige Anschläge 26 gebildet. Da bei dieser Ausführung keine Gewindebohrung 25 vorgesehen ist, ist am Ende des Ankerbolzens 1 eine Öse 27 ausgebildet. Diese Ausführungsform eines Befestigungselementes ohne optische Abdeckung der Druckfeder 18 dient beispielsweise zum Aufhängen von Lampen od. dgl.

## Patentansprüche

1. In einem Bohrloch in festem Untergrund verkeilbares Befestigungselement mit einem Ankerbolzen (1) und einem Keil (10), wobei der Ankerbolzen (1) eine mit einer achsparallelen Fläche (5) und einer daran anschliessenden Keilfläche (8) versehene Aussparung aufweist, in die der Keil (10) mit einem kreissegmentförmigen ebenen Abschnitt (12) und einem daran anschliessenden keilförmigen Abschnitt (11) derart angeordnet ist, dass sich in der Ausgangslage des Befestigungselementes ein im wesentlichen kreisförmiger Querschnitt ergibt, wobei weiterhin der Keil (10) über einen an einem Widerlager am Ankerbolzen (1) sich abstützenden Kraftspeicher verschiebbar ist und wobei der Ankerbolzen (1) und der Keil (10) durch einen verschiebbaren unelastischen Ring (17) zusammengehalten sind, dadurch gekennzeichnet, dass der Kraftspeicher (Druckfeder 18) ständig gegen den Keil (10) anliegt und dass der Ring (15) im Bereich der Keilfläche (8) angeordnet ist.

2. Befestigungselement nach Anspruch 1, dadurch gekennzeichnet, dass der Innendurchmesser (D) des Rings (15) nur geringfügig grösser ist als der Durchmesser (d) des Ankerbolzens (1).

3. Befestigungselement nach Anspruch 2, dadurch gekennzeichnet, dass der Innendurchmesser (D) des Rings (15) höchstens 0,1 mm grösser ist als der Durchmesser (d) des Ankerbolzens (1).

4. Befestigungselement nach einem der Ansprüche 1 bis 3, dadurch gekennzeichnet, dass die Keilfläche (8) einen Neigungswinkel ($\alpha$) von 5 bis 8° gegenüber der Mittel-Längs-Achse (6) des Ankerbolzens (1) aufweist.

5. Befestigungselement nach Anspruch 4, dadurch gekennzeichnet, dass der Neigungswinkel ($\alpha$) etwa 5° beträgt.

6. Befestigungselement nach einem der Ansprüche 1 bis 5, dadurch gekennzeichnet, dass das Widerlager (Gewindehülse 16) für den Kraftspeicher (Druckfeder 18) in Längsrichtung des Ankerbolzens (1) nachspannbar ist.

7. Befestigungselement nach Anspruch 6, dadurch gekennzeichnet, dass das Widerlager durch eine auf einem Gewindeabschnitt (2) des Ankerbolzens (1) angeordnete Gewindehülse (16) gebildet ist.

8. Befestigungselement nach Anspruch 6 oder 7, dadurch gekennzeichnet, dass das Widerlager (Gewindehülse 16) einen den Kraftspeicher (Druckfeder 18) umgebenden Aussenmantel (19) aufweist.

9. Befestigungselement nach einem der Anspüche 1 bis 8, dadurch gekennzeichnet, dass das Widerlager (Gewindehülse 16) eine nach aussen offene Gewindebohrung (25) aufweist.

## Claims

1. A fastening element which can be anchored in a borehole in solid material with an anchoring bolt (1) and a key 10, the anchoring bolt (1) having a recess with an axially parallel surface (5) and a key surface (8) connecting therewith, into which recess the key (10) with a segment-shaped plane portion (11) and a wedgeshaped portion (12) connecting therewith is arranged in such a manner that in the starting position of the fastening element there is obtained a substantially circular cross-section, the key (10), furthermore, being displaceable over a pressure store bearing upon a counter-bearing on the anchoring bolt (1) and the anchoring bolt (1) and the key (10) being held together by a displaceable inelastic ring (17), characterised in that the pressure store (pressure spring 18) applies constantly against the key (10) and in that the ring (15) is arranged in the region of the key surface (8).

2. A fastening element according to Claim 1, characterised in that the inner diameter (D) of the ring (15) is only slightly greater than the diameter (d) of the anchoring bolt (1).

3. A fastening element according to Claim 2, characterised in that the inner diameter (D) of the ring (15) is at most 0,1 mm greater than the diameter (d) of the anchoring bolt (1).

4. A fastening element according to one of Claims 1 to 3, characterised in that the key surface (8) has an angle of slant ($\alpha$) of 5 to 8° relative to the central longitudinal axis (6) of the anchoring bolt (1).

5. A fastening element according to Claim 4, characterised in that the angle of slant ($\alpha$) is about 5°.

6. A fastening element according to one of Caims 1 to 5, characterised in that the abutment (threaded bush 16) for the power store (pressure spring 18) is tensionable in the longitudinal direction of the anchoring bolt (1).

7. A fastening element according to Claim 6, characterised in that the abutment is formed by a threaded bush (16) disposed on a threaded portion (2) of the anchoring bolt (1).

8. A fastening element according to Claim 6 or 7, characterised in that the abutment (threaded bush 16) has an outer shell line (19) surrounding the power store (pressure spring 18).

9. A fastening element according to one of Claims 1 to 8, characterised in that the abutment (threaded bush 16) has an outwardly open threaded hole (25).

## Revendications

1. Elément de fixation pouvant être coincé dans un forage d'un matériau solide, comportant un boulon d'ancrage (1) et une clavette (10), le boulon d'ancrage (1) présentant un évidement limité par une surface (5) parallèle à l'axe et une surface de coin (8) qui s'y raccorde, la clavette (10) qui présente une partie lisse (11) en forme de segment circulaire et une partie en forme de coin (12) qui s'y raccorde, étant disposée dans cet évidement de manière que, dans sa position initiale, l'élément de fixation ait une section transversale sensiblement circulaire, la clavette (10) pouvant en outre être déplacée par un accumulateur d'énergie qui s'appuie d'un côté contre une butée du boulon d'ancrage (1), le boulon d'ancrage (1) et la clavette (10) étant maintenus assemblés par une bague déplaçable non élastique (15), caractérisé en ce que l'accumulateur d'énergie (ressort de compression 18) s'appuie constamment contre la clavette (10) et en ce que la bague (15) est disposée dans la zone de la surface de coin (8).

2. Elément de fixation selon la revendication 1, caractérisé en ce que le diamètre intérieur (D) de la bague (15) n'est que légèrement supérieur au diamètre (d) du boulon d'ancrage (1).

3. Elément de fixation selon la revendication 2, caractérisé en ce que le diamètre intérieur (D) de la bague (15) est supérieur au plus de 0,1 mm au diamètre (d) du boulon d'ancrage (1).

4. Elément de fixation selon l'une des revendications 1 à 3, caractérisé en ce que la surface de coin (8) présente un angle d'inclinaison ($\alpha$) de 5 à 8° par rapport à l'axe longitudinal (6) du boulon d'ancrage (1).

5. Elément de fixation selon la revendication 4, caractérisé en ce que l'angle d'inclinaison ($\alpha$) est égal à 5° environ.

6. Elément de fixation selon l'une des revendications 1 à 5, caractérisé en ce que la butée (douille filetée 16) destinée à l'accumulateur d'énergie (ressort de compression 18) peut subir un réglage de serrage dans la direction longitudinale du boulon d'ancrage (1).

7. Elément de fixation selon la revendication 6, caractérisé en ce que la butée est constituée d'une douille filetée (16) disposée sur un tronçon fileté (2) du boulon d'ancrage (1).

8. Elément de fixation selon la revendication 6 ou 7, caractérisé en ce que la butée (douille filetée 16) présente une enveloppe extérieure (19) entourant l'accumulateur d'énergie (ressort de compression 18).

9. Elément de fixation selon l'une des revendications 1 à 8, caractérisé en ce que la butée (douille filetée 16) présente un trou fileté (25) overt vers l'extérieur.

FIG.1

FIG.3

FIG.2

FIG.4

FIG.6

FIG.5

FIG.7

7

FIG. 8

FIG. 9

FIG. 10

# FIG.11

# FIG.12